# EUROPÄISCHE PATENTSCHRIFT

(11) **EP 1 576 056 B1**
(45) Veröffentlichungstag und Bekanntmachung des Hinweises auf die Patenterteilung: **28.10.2009**
(21) Anmeldenummer: 03813136.3
(22) Anmeldetag: 17.12.2003
(51) Int. Cl.: C08L 83/04, D06M 15/643, C08K 5/17, C11D 1/62

(54) **HOCHKONZENTRIERTE, SELBSTEMULGIERENDE ZUBEREITUNGEN, ENTHALTEND ORGANOPOLYSILOXANE UND ALKYLAMMONIUMVERBINDUNGEN UND DEREN VERWENDUNG IN WÄSSRIGEN SYSTEMEN**
HIGHLY CONCENTRATED, SELF-EMULSIFYING PREPARATIONS CONTAINING ORGANOPOLYSILOXANES AND ALKYL AMMONIUM COMPOUNDS AND THEIR USE IN AQUEOUS SYSTEMS
PREPARATIONS AUTOEMULSIFIANTES, HAUTEMENT CONCENTREES ET CONTENANT DES ORGANOPOLYSILOXANES ET DES COMPOSES ALKYLAMMONIUM, ET LEUR UTILISATION DANS DES SYSTEMES AQUEUX

(30) Priorität: 18.12.2002 DE 10259291
(43) Veröffentlichungstag der Anmeldung: 21.09.2005
(73) Patentinhaber: Rudolf GmbH, 82538 Geretsried (DE)
(72) Erfinder: SANDNER, Bernhard, 82538 Geretsried (DE); STANICA, Cristina, 82515 Wolfratshausen (DE); JIANG, Longying, 82538 Geretsried (DE)
(74) Vertreter: Zumstein, Angela
(86) Internationale Anmeldenummer: PCT/EP2003/014408
(87) Internationale Veröffentlichungsnummer: WO 2004/055112

(56) Entgegenhaltungen:
- US-A1- 2002 068 689
- US-B1- 6 207 141

## Beschreibung

Die Erfindung betrifft hochkonzentrierte, selbstemulgierende Zubereitungen, enthaltend Organopolysiloxane und Alkylammoniumverbindungen und deren Verwendung in wässrigen Systemen auf textilen Substraten. Insbesondere betrifft die Erfindung Zubereitungen, welche aus quaternierten oder teilquaternierten, aminofunktionellen Organopolysiloxanen, quaternären Alkylammoniumverbindungen, gegebenenfalls einem organischen Hydrotropikum und gegebenenfalls Wasser bestehen.

Aminogruppen enthaltende Organopolysiloxane sowie Organopolysiloxane, welche quaternierte Ammoniumgruppen in unterschiedlicher Positionierung auf dem Polysiloxanrücken tragen, werden schon seit längerer Zeit als Textilausrüstungsmittel eingesetzt. Bei den damit behandelten Textilien werden gute Weichgriffeffekte erreicht. Essentielle Voraussetzung für die Anwendung in textilen Ausrüstungsflotten ist die gute Verdünnbarkeit in Wasser sowie die Verträglichkeit mit weiteren, häufig in den Ausrüstungsflotten enthaltenen Chemikalien.

Organopolysiloxane sind im Allgemeinen nicht in Wasser löslich, selbst wenn sie aminofunktionelle Gruppen in freier oder quaternierter Form tragen. Durch derartige funktionelle Gruppen wird die Emulgierfähigkeit der Organopolysiloxane zwar verbessert, die Fähigkeit zur spontanen Selbstemulgierung zu Makro-, Mini- oder Mikroemulsionen ist aber nicht vorhanden. Um die Organopolysiloxane in eine aus wässrigen Medien applizierfähige Form zu bringen, ist daher gewöhnlich der Zusatz von Emulgatoren erforderlich. Dies erfolgt üblicherweise gemäß des Standes der Technik durch die Mitverwendung von nichtionogenen Emulgatoren, deren Menge sich nach der jeweiligen Emulsionstype (Makro-, Mini- oder Mikroemulsion) richtet.

DE 2631419 -C2 beschreibt eine Zusammensetzung für die Textilbehandlung in Form einer wässrigen Dispersion aus einem Weichgriffmittel auf der Basis von quaternären Fettaminderivaten und aus einem Organopolysiloxan, welches als wässrige Emulsion vorliegt.

In US 5602224-A wird die Herstellung eines quaternäre Fettamingruppen enthaltenden Organopolysiloxans, welches reaktive Silanol- und/oder Alkoxygruppen enthält, und seine Verwendung als Lösungsvermittler zwischen Siliconölen und quaternären Fettaminderivaten beschrieben.

WO 00/10524 A1 beschreibt für ein Haarpflegemittel eine stark verdünnte Mischung aus 0,1 % - 3% eines Organopolysiloxans, welches terminal jeweils eine quaternäre Ammoniumgruppe enthält, und aus 0,2% - 6% einer quaternären Ammoniumverbindung.

Die Herstellung von wässrigen Mikroemulsionen aus aminofunktionellen Organopolysiloxanen wird beispielsweise in der WO 88/08436 beschrieben. Dabei werden durch Erhitzen einer Mischung von mit Säure neutralisiertem, aminogruppenhaltigem Organopolysiloxan, Wasser und Emulgator klare Mikroemulsionen hergestellt.

Eine weitere Möglichkeit zur Herstellung von aus wässrigen Medien applizierfähigen Makro-, Mini- oder Mikroemulsionen besteht darin, die Organopolysiloxanmoleküle mit hydrophilen Gruppen zu modifizieren, welche eine spontane Selbstemulgierung beim Eintragen in wässrige Flotten erzeugen. Die molekularintern positionierten, hydrophilen Gruppen bestehen dabei üblicherweise aus Alkylenoxidresten, welche in ähnlicher Form auch Bestandteil von nichtionogenen Emulgatoren sind. So wird in der EP 1 174 469 A2 die Herstellung eines hydrophil modifizierten Organopolysiloxanes gelehrt, welches durch Equilibrierung eines lateral mit Polyoxyalkylenethergruppen modifizierten Polysiloxanes mit aminofunktionellen Silanen und Octamethylcyclotetrasiloxan in Gegenwart eines basischen Equilibrierungskatalysators hergestellt wird. Bei den solcherart hergestellten, molekularintern mit hydrophilen Gruppen modifizierten Organopolysiloxanen können durch Variierung des Anteils an hydrophiler Komponente Verbindungen erzeugt werden, welche spontan selbstemulgierend zu Makroemulsionen mit Teilchengrößen über 50 nm, zu Mikroemulsionen mit Teilchengrößen unter 50 nm bzw. im Extremfall zu klar wasserlöslichen Silikontensiden führen. Bei solchen Verbindungen ist wegen der hohen Wasserlöslichkeit eine Beständigkeit gegenüber Haushaltswäschen nicht gegeben.

Als wesentlicher Nachteil sowohl der in der externen, wässrigen Phase der Makro-, Mini- oder Mikroemulsionen vorliegenden nichtionogenen Emulgatoren als auch der in Organopolysiloxanen molekularintern positionierten Alkylenoxidreste ist die Tatsache zu nennen, dass diese Molekülgruppen stets eine Beeinträchtigung des Weichgriffes auf den damit ausgerüsteten Textilien verursachen. Diese unangenehme Eigenschaft wird noch dadurch verstärkt, dass bei den in der textilen Anwendung bevorzugten Mikroemulsionen der Anteil an externen Emulgatoren, bzw. im Falle der molekularintern mit hydrophilen Gruppen modifizierten Organopolysiloxane deren molarer Anteil sehr hoch sein muss, um die gewünschte Teilchengröße unter 50 nm zu erreichen.

Die unter Verwendung nichtionogener Emulgatoren hergestellten Mikroemulsionen besitzen üblicherweise Organopolysiloxankonzentrationen von höchstens 30 - 35 Gewichtsprozent, da bei darüber liegenden Konzentrationen eine Viskositätszunahme bis hin zu pastenähnlichem Aspekt zu beobachten ist. Um die daraus resultierenden, kommerziell nachteiligen, höheren Transport- und Verpackungskosten zu vermeiden, sind möglichst hohe Produktkonzentrationen erstrebenswert.

Durch die Anwesenheit von nichtionogenen Emulgatoren steigt üblicherweise auch die Schaumtendenz der daraus hergestellten Emulsionen und Anwendungsflotten stark an. Dies trifft auch auf die molekularintern alkylenoxidmodihzierten aminofunktionellen Polysiloxane zu. Hierdurch wird die universelle Anwendbarkeit auf den schnell laufenden Textilausrüstungsmaschinen, wie beispielsweise den Düsenfärbeapparaten eingeschränkt, weil der in diesen Apparaten durch die starke Mechanik erzeugte Schaum den Transport der zu behandelnden Ware in der Maschine sowie den Stoffaustausch zwischen Behandlungsflotte und textilem Substrat erheblich behindert.

Als weiterer Nachteil ist die durch die Anwesenheit von alkylenoxidhaltigen Gruppen bedingte Verstärkung der Thermomigration von Dispersionsfarbstoffen bei synthetischen Substraten zu nennen, wodurch die Reibechtheiten insbesondere bei tiefen Farbstellungen teilweise stark beeinträchtigt werden.

Es bestand daher die Aufgabe, Zubereitungen auf der Basis von Organopolysiloxanen zu schaffen, welche einerseits frei von externen, nichtionogenen Emulgatoren sind und auch nicht molekularintern mit hydrophilen, nichtionogenen Gruppen modifiziert sind und welche andererseits stabile, klare Zubereitungen darstellen, welche eine spontane Selbstemulgierung beim Eintrag in wässrige Applikationsflotten sicherstellen und sich während einer längeren Lagerung nicht entmischen. Durch geeignete Zusammenstellung der Einzelkomponenten sollte zudem die Herstellung von Makro-, Mini- und Mikroemulsionen ermöglicht werden. Gleichzeitig sollten die Zubereitungen in möglichst hochkonzentrierter Form vorliegen, um Transport- und Verpackungskosten soweit als möglich zu reduzieren.

Des weiteren war es Aufgabe, die Auswahl des zu verwendenden Organopolysiloxanes so zu treffen, dass während der unterschiedlichen Applikationsprozesse eine hohe Beständigkeit gegenüber Restalkali gegeben ist. Restalkali verbleibt bei der Textilbehandlung häufig z.B. durch ungenügend sorgfältig durchgeführte Waschprozesse im Faser- bzw. im Fadeninneren. Der hieraus öfters resultierende Anstieg des pH-Wertes der Behandlungsflotten auf über 9 kann dabei zu Emulsionsspaltungen und zur Koaleszenz der Emulsionspartikel und deren Aufschwimmen als Öltröpfchen auf der Oberfläche der Behandlungsflotte führen. Im weiteren Veredelungsablauf können die Öltröpfchen auf das Textilgut transferiert oder auch auf den Walzen der Behandlungsaggregate niedergeschlagen werden. Dabei entstehen auf den Textilien Silikonflecken, welche sich nicht oder nur sehr schwer wieder auswaschen lassen.

Eine weitere Aufgabe bestand darin, die Zusammensetzung der Zubereitung so zu wählen, dass während einer Anwendung auf Ausrüstungsmaschinen, welche hohe Scherkräfte auf die Behandlungsflotte ausüben, die Stabilität der Zubereitung nicht reduziert wird und damit ähnlich negative Folgen vermieden werden, wie sie beispielsweise durch einen starken pH-Wertanstieg verursacht werden. Insbesondere auf den modernen voll- oder teilgefluteten Düsenfärbeapparaten treten während der Umpumpvorgänge hohe Scherbeanspruchungen auf, weshalb beispielsweise während einer Anwendung im Ausziehverfahren wiederum Emulsionsspaltung mit den unerwünschten Silikonablagerungen auf dem Textilsubstrat auftreten kann. Gleichzeitig sollte bei der Anwendung auf diesen Apparaten die Schaumentwicklung auf möglichst niedrigem Niveau gehalten werden, um optimalen Warentransport und Stoffaustausch in der Applikationsmaschine sicher zu stellen.

Die Zubereitungen sollten weiterhin auf den damit behandelten Substraten eine signifikante Verbesserung hinsichtlich der Weichgriffeigenschaften, der Vergilbungsinhibierung und der Hydrophilie zeigen. Zusätzlich sollten diese Anforderungen auch nach mehrfachen Haushaltswäschen erfüllt werden. Zudem sollten die durch alkylenoxidhaltige Gruppen thermomigrationsbedingten Reibechtheitsverschlechterungen von Dispersionsfärbungen auf synthetischen Substraten vermieden werden.

In unerwarteter Weise hat sich gezeigt, dass diese Aufgaben nun erfindungsgemäß durch die Verwendung von quaternierten oder teilquaternierten, aminofunktionellen Organopolysiloxanen gelöst werden können, welchen Alkylammoniumverbindungen sowie gegebenenfalls ein organisches Hydrotropikum und Wasser zugesetzt sind und wie sie im Patentanspruch 1 definiert werden.

Mit den erfindungsgemäß verwendeten, quaternierten oder teilquaternierten Organopolysiloxanen werden gute Stabilitäten unter Anwendungsbedingungen in einem breiten pH-Wert-bereich (insbesondere zwischen pH 7 und 12) und gute Vergilbungsresistenz erhalten. Ferner ergeben die erfindungsgemäßen Zubereitungen einen hervorragenden Weichgriff.

Die in den erfindungsgemäßen Zubereitungen enthaltenen Alkylammoniumverbindungen sowie das gegebenenfalls vorhandene organische Hydrotropikum übernehmen die Aufgaben der herkömmlich zugesetzten nichtionogenen Emulgatoren. Gleichzeitig bewirken diese Komponenten eine Reduzierung der Viskosität der Zubereitungen, welche auch bei hohen Produktkonzentrationen noch eine mühelose Entnahme aus Gebinden sowie ein problemloses Verdünnen zulässt.

Die erfindungsgemäßen Zubereitungen besitzen eine gute Stabilität gegenüber Scherbeanspruchungen auf schnell laufenden Textilveredelungsmaschinen. Weiterhin zeichnen sich die mit den erfindungsgemäßen Zubereitungen ausgerüsteten Textilien, insbesondere Bade- und Handtücher sowie Unterwäsche und Sportbekleidung durch gute Saugfähigkeiten aus.

Auf den textilen Substraten verbleiben nach einer Behandlung mit den genannten Zubereitungen ausschließlich die quaternierten oder teilquaternierten, aminofunktionellen Organopolysiloxane sowie die Alkylammoniumverbindungen. Diese Wirkstoffkombination erzeugt aufgrund des unterschiedlichen Weichgriffcharakters der Einzelkomponenten einen besonders guten Warengriff, welcher auf cellulosischen Substraten neben einer guten Oberflächenglätte eine kühle, trockene Weichheit aufweist und gleichzeitig einen angenehm vollen, flauschigen Griff erzeugt.

Sofern die Zubereitungen als Mikroemulsionen vorliegen, wird bevorzugt eine innere Weichheit erzeugt, verursacht durch die niedrige Emulsionspartikelgröße unter 50 nm der Einzelkomponenten, welche tief in das Faden- bzw. Faserinnere eindringen können. Werden die Zubereitungen auf cellulosischen Substraten in Form von Makroemulsionen mit Teilchengrößen über 50 nm angewendet, so erfolgt meist eine Anreicherung der aktiven Komponenten (1) und (2) auf der Faseroberfläche. Dieser Effekt wird durch Sorption der wässrig löslichen Zubereitungsanteile ins Faserinnere und dadurch bedingtes Abfittrieren bzw. Aufkonzentrieren der größeren Emulsionspartikel in den äußeren Faserschichten verursacht. Der sich hierdurch ergebende Griffcharakter des Substrates wirkt insgesamt fülliger und glatter.

Auf synthetischen Substraten sind die durch unterschiedliche Teilchengröße der Emulsionspartikel verursachten Unterschiede im Weichgriffverhalten nicht so stark ausgeprägt wie bei nativen Substraten. Dies ist durch die Morphologie der Fasern bedingt, welche aufgrund der nicht vorhandenen Saugfähigkeit und des glatten Oberflächencharakters eine Auflagerung der Wirkkomponenten ausschließlich auf der Faseroberfläche zulässt. Die erfindungsgemäßen Zubereitungen erzeugen auf Geweben und Gewirken aus Polyester und Polyamid einen angenehmen, seidenähnlichen und trotzdem fülligen Warengriff.

Ein weiterer Vorteil der erfindungsgemäßen Zubereitungen liegt in einer geringen Neigung zur Vergilbung, welche häufig bei den herkömmlich ausschließlich mit aminofunktionellen Polysiloxanen behandelten, weißen und hellfarbigen textilen Substraten bei Trocknungstemperaturen über 120°C auftritt.

Bei vielen textilen Anwendungen ist Hydrophobie unerwünscht. So wird beispielsweise von Bade- und Handtüchern neben einem guten, flauschigen Weichgriff eine gute Saugfähigkeit erwartet, um einen optimalen Abtrocknungseffekt zu erreichen. Bei Unterwäsche ist häufig ebenfalls gute Saugfähigkeit erwünscht. Auch bei vielen Bekleidungsartikeln im Sport- und Outdoorbereich, wie beispielsweise Fahrrad- oder Fußballertrikots, ist neben gutem Weichgriff die Saugfähigkeit des textilen Grundmaterials Voraussetzung. Bei herkömmlich ausschließlich mit aminofunktionellen Polysiloxanen behandelten Substraten wird häufig eine stark ausgeprägte Hydrophobie festgestellt.

Als Besonderheit ist bei den erfindungsgemäßen Zubereitungen die hervorragende Hydrophilie der damit behandelten textilen Substrate zu erwähnen. Sie können daher im Gegensatz zu den herkömmlichen, aminofunktionellen Polysiloxanen auch für Artikel verwendet werden, bei welchen hohe Saugfähigkeit verlangt wird.

Thermomigrationsbedingte Reibechtheitsverschlechterungen von Dispersionsfärbungen auf synthetischen Substraten werden erfindungsgemäß wegen der Abwesenheit externer oder molekularinterner nichtionogener Emulgatoren praktisch vermieden.

Auf synthetischen Textilartikeln ist häufig ausgeprägte statische Aufladung zu beobachten. Die erfindungsgemäßen Zubereitungen zeigen aufgrund der hohen Ladungsdichte der quaternären Komponenten eine hervorragende Leitfähigkeit, welche auch nach mehrfachen Haushaltswäschen erhalten bleibt.

Die Verwendung der erfindungsgemäßen Zubereitungen erfolgt auf allen üblichen textilen Substraten. So lassen sich Gewebe und Gewirke aus nativen Fasern, wie beispielsweise Baumwolle oder Wolle und auch aus synthetischen Fasern, wie beispielsweise Viskose, Polyester, Polyamid oder Polyacrylnitril behandeln.

Unter den im nachfolgenden Text verwendeten Begriffen "Anwendungsflotte" oder "Flotte" sind die auf die jeweils gewünschte Verdünnung eingestellten, wässrigen Behandlungs- oder Testbäder zu verstehen. Diese können in Abhängigkeit von der jeweils gewünschten Anwendung die erfindungsgemäßen Zubereitungen in alleiniger Form sowie gegebenenfalls Zusätze von anderen, in der textilen Ausrüstung üblicherweise verwendeten Präparationsmitteln enthalten.

Die Verwendung der erfindungsgemäßen Zubereitungen kann beispielsweise als Zwangsapplikation oder im Ausziehverfahren erfolgen. Die Zwangsapplikation mit dem Foulard wird durch Tränken des textilen Substrates mit der Anwendungsflotte, anschließendes Abquetschen auf dem Foulard auf die gewünschte Nassaufnahme und eine abschließende Trocknungspassage durchgeführt. Sofern die erfindungsgemäßen Zubereitungen aus der Anwendungsflotte im Ausziehverfahren appliziert werden, ist, bedingt durch die hohe Ladungsdichte der beiden quaternären Komponenten (1) und (2), ein rascher und vollständiger Badauszug zu beobachten.

Die mit den erfindungsgemäßen Zubereitungen behandelten Substrate weisen nicht nur gute Anfangseffekte auf, sondern besitzen auch eine Beständigkeit gegen mehrfache Haushaltswäschen. Dabei bleiben der gute Weichgriff sowie die Hydrophilie weitestgehend erhalten.

Der erste Gegenstand der Erfindung sind Zubereitungen, gekennzeichnet durch einen Gehalt, bezogen auf die Gesamtzusammensetzung, an
(1) 40 bis 95 Gewichtsprozent eines quaternierten oder teilquaternierten, aminofunktionellen Organopolysiloxans der allgemeinen Formel 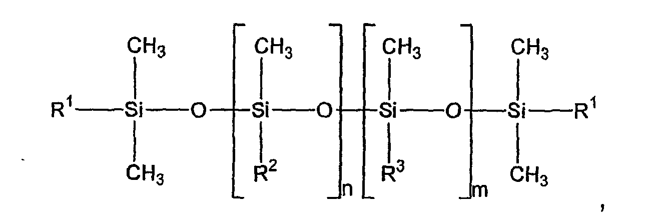 wobei 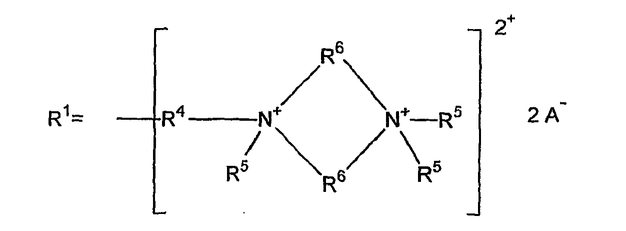 oder 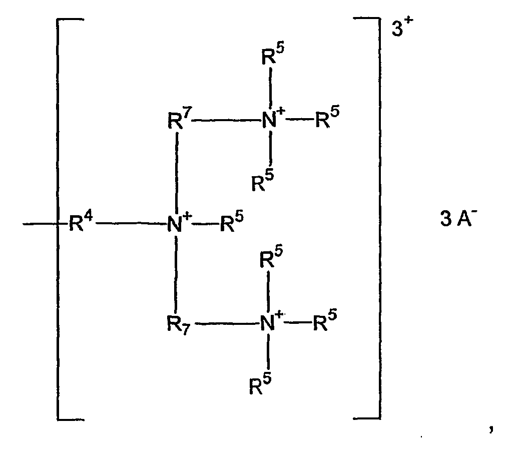 R²= -(CH₂)ₒ-NH-(CH₂)ₚ-NH₂ oder -(CH₂)ₚ-NH₂,
   R³= -(CH₂)_{q}-H oder 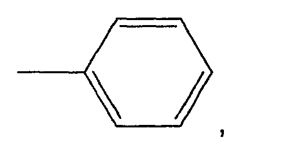 R⁴= 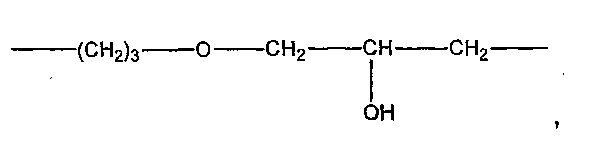 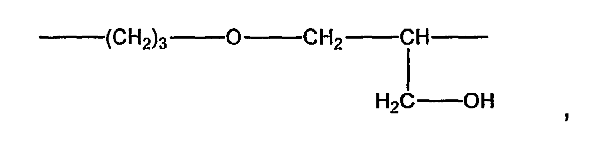 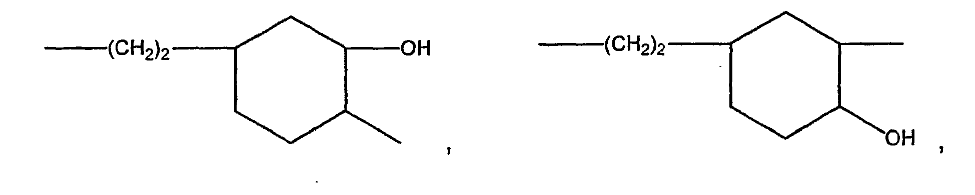 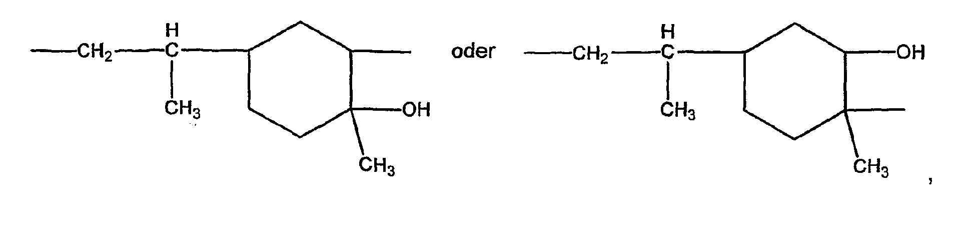
   - R⁵=: -(CH₂)ᵣ-H,
   - R⁶=: -(CH₂)ₛ-,
   - R⁷=: -(CH₂)ₜ-,
   - A⁻: anorganische oder organische Anionen,
   - n: eine ganze Zahl von 0 - 20, vorzugsweise 0 -14, besonders bevorzugt 0 - 5,
   - m: eine ganze Zahl von 20 - 2000, vorzugsweise 40 - 1000, besonders bevorzugt 40 - 200,
   - o und p: jeweils eine ganze Zahl von 1 -10, vorzugsweise 2 - 4,
   - q: eine ganze Zahl von 1 - 10, vorzugsweise 1,
   - r: eine ganze Zahl von 1 - 18, vorzugsweise 1,
   - s: eine ganze Zahl von 2 - 3, vorzugsweise 2 und
   - t: eine ganze Zahl von 2 - 5, vorzugsweise 2 - 4
   bedeuten, mit der Maßgabe, dass der Gesamtstickstoffgehalt der Komponente (1) 0,05 bis 2,0 Gewichtsprozent, bezogen auf die Gesamtzusammensetzung von Komponente (1) beträgt,
(2) 2 bis 20 Gewichtsprozent einer Alkylammoniumverbindung der allgemeinen Formel 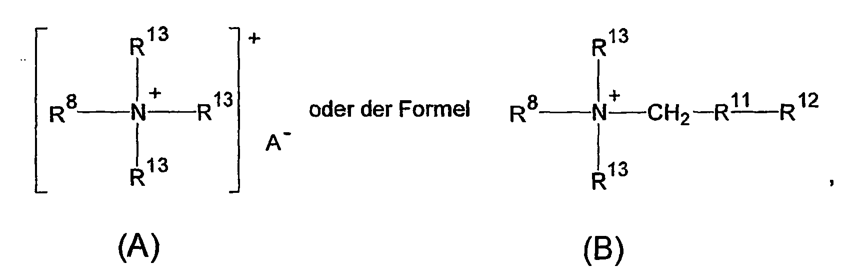 wobei
   R⁸= -R⁵ oder -R¹⁰,
   R¹³= -R⁵, -R¹⁴ oder 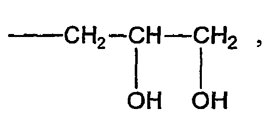 R¹⁴ = 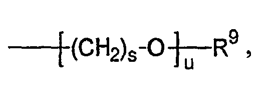 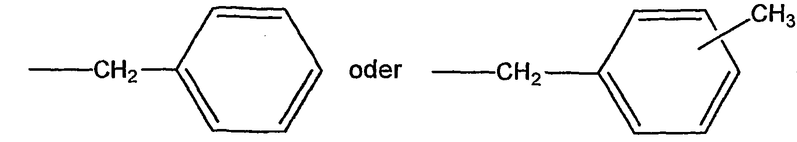 ist, mit der Maßgabe, dass, wenn in den Formeln (A) und (B) R⁸ und R¹³ gleichzeitig R⁵ darstellen, das diese Reste tragende Stickstoffatom höchstens zwei Reste R⁵ und mindestens einen Rest R¹⁴ aufweist,
   R⁹= -(CH₂)_{w}-H, 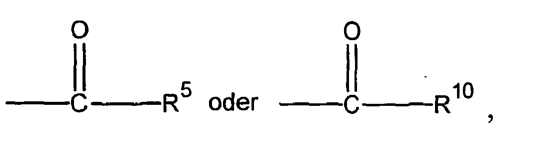 R¹⁰ = -Oleyl, -Linoleyl oder -Linolenyl,
   R¹¹= -(CH₂)_{w}-,
   R¹² = 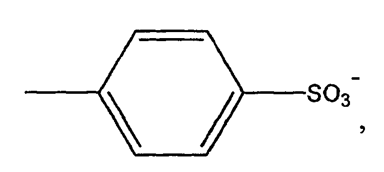 -SO₃⁻ oder -COO⁻,
   u = 1 - 6, bevorzugt 1 - 2,
   w = 0 - 20 bedeuten und
   wobei A⁻, R⁵ und s die bei der Komponente (1) genannten Bedeutungen besitzen,
(3) 0 bis 20 Gewichtsprozent eines organischen Hydrotropikums und
(4) 0 bis 20 Gewichtsprozent Wasser.

Sämtliche Gewichtsangaben der erfindungsgemäßen Zubereitungen beziehen sich auf die Gesamtzusammensetzung der erfindungsgemäßen Zubereitung. Als bevorzugte Bereiche sind für die Komponente (1) ein Bereich von 50 - 95, insbesondere 60 - 90 Gewichtsprozent; für die Komponente (2) 2 - 15, insbesondere 5 - 15 Gewichtsprozent zu nennen. Sofern die Komponente (3) zugesetzt wird, liegt deren Konzentration bevorzugt im Bereich von 1 -10, insbesondere von 2 - 7 Gewichtsprozent. Sofern die Komponente (4) zugesetzt wird, liegt deren bevorzugter Bereich bei 5 - 20, insbesondere jedoch bei 10 - 20 Gewichtsprozent.

Der Stickstoffgehalt der Komponente (1) liegt bevorzugt bei 0,1 - 1,5 Gewichtsprozent, insbesondere jedoch bei 0,1 -1,0 Gewichtsprozent bezogen auf die Gesamtzusammensetzung von Komponente (1).

Die Anionen A⁻ sind von anorganischen oder organischen Säuren abgeleitet. Als Beispiele für anorganische Anionen sind Chlorid, Bromid, Jodid und Sulfat zu nennen; bevorzugt sind Chlorid und Sulfat. Beispiele für organische Anionen sind Tosylat und Acetat; bevorzugt ist Tosylat.

Die Herstellung der teilquatemierten oder quaternierten, aminofunktionellen Organopolysiloxane der Komponente (1) erfolgt nach Methoden, welche dem Fachmann bekannt sind. Sofern n den Wert 1 oder >1 bedeutet (teilquaternierte Verbindungen), können diese Verbindungen durch Equilibrierung von terminal quaternierten, aminofunktionellen Organopolysiloxanen mit Silanhydrolisaten, welche laterale Aminogruppen tragen in Gegenwart bekannter Equilibrierungskatalysatoren synthetisiert werden. Sofern n den Wert Null bedeutet (quaternierte Verbindungen), können diese Verbindungen ausgehend von terminal aminofunktionell modifizierten Organopolysiloxanen durch Quaternierung (nach gegebenenfalls vorher erfolgter Alkylierung) hergestellt werden.

Als Alkylammoniumverbindung (Komponente (2)) können mit Dimethylsulfat, Benzylchlorid oder Methylchlorid quaternierte Fettsäureester von Alkanolaminen sowie deren Mischformen Verwendung finden, wobei der Fettsäurerest zwischen 9 und 23 Kohlenstoffatome, bevorzugt jedoch 11 - 17 Kohlenstoffatome enthält. Gut geeignet sind auch ungesättigte Fettsäurereste mit bevorzugt 11 - 17 Kohlenstoffatomen in der Alkylkette. Die Alkanolamine können dabei voll- oder teilverestert vorliegen. Soweit teilveresterte Alkanolamine zur Verwendung gelangen, können diese noch freie Hydroxyethyl-, Hydroxyethylethoxy-, Hydroxypropyl-, Hydroxypropylethoxy- oder Hydroxyethyldiethoxyreste aufweisen. Geeignet sind ferner unveresterte, mit den genannten Alkylierungsmitteln quaternierte Alkanolamine, deren freie Gruppen aus Hydroxyethyl-, Hydroxyethylethoxy-, Hydroxypropyl-, Hydroxypropylethoxy- oder Hydroxyethyldiethoxyresten bestehen können.

Die optional einzusetzende Komponente (3), ein organisches Hydrotropikum, kann üblicherweise aus der Gruppe der polyfunktionellen Alkohole ausgewählt werden. So können Dialkohole mit 2 - 10, bevorzugt 2 - 6, insbesondere jedoch 2 - 4 Kohlenstoffatomen pro Molekül eingesetzt werden. Gut geeignet sind auch deren Mono- und Diether sowie die Mono- und Diester dieser Dialkohole. Als besonders bevorzugt zu verwendende Beispiele für die Komponente (3) sind Butyldiglykol, 1,2-Propylenglykol und Dipropylenglykol, Tributoxyethylphosphat und Triisobutylphosphat zu nennen.

Die Herstellung der erfindungsgemäßen Zubereitungen erfolgt durch einfaches Verrühren der Komponenten (1) und (2) sowie gegebenenfalls (3) und (4) bei 30 - 40°C.

Weiterer Gegenstand der Erfindung ist die Verwendung der Zubereitungen gemäß Anspruch 1 bei der Veredelung textiler Substrate in wässrigen Bädern und Anwendungsflotten, gegebenenfalls zusammen mit weiteren Präparationsmitteln. Gewebe und Gewirke aus nativen Fasern, wie beispielsweise Baumwolle oder Wolle, aber auch aus synthetischen Fasern, wie beispielsweise Viskose, Polyester, Polyamid oder Polyacrylnitril können mit den erfindungsgemäßen aminofunktionellen Polysiloxanen behandelt werden. Bei den gegebenenfalls zusätzlich mitverwendeten Präparationsmitteln kann es sich beispielsweise um Chemikalien zur Knitterfreiausrüstung, um solche zur Verbesserung der Vemähbarkeit des textilen Substrates oder um andere, üblicherweise in textilen Applikationsflotten zur Anwendung gelangende Produkte handeln.

Die Konzentration der erfindungsgemäßen Zubereitungen in den Anwendungsflotten wird so gewählt, dass die behandelten Substrate zwischen 0,3 und 0,6 Gewichtsprozent der anspruchsgemäßen Komponenten (1) und (2) bezogen auf das Gewicht des Substrates enthalten.

Die Erfindung wird durch die nachfolgenden Beispielen näher erläutert. Die in den Beispielen 1 und 2 verwendeten Organopolysiloxane konnten wegen starker Viskositätszunahme bei höheren Konzentrationen jeweils nur mit einer Konzentration von 18 Gewichtsprozent eingesetzt werden, um fließfähige, für die Anwendung gut geeignete Mikroemulsionen sicherzustellen.

Bei den Kettenlängenangaben, die in den Formeln der Beispiele für die anspruchsgemäßen Indizes n und m erscheinen, handelt es sich jeweils um Durchschnittswerte.

### Beispiel 1 (nicht erfindungsgemäß)

Eine Zubereitung wird hergestellt durch Verrühren von 36 Gramm eines Organopolysiloxanes mit lateral positionierten Aminogruppen der durchschnittlichen Struktur 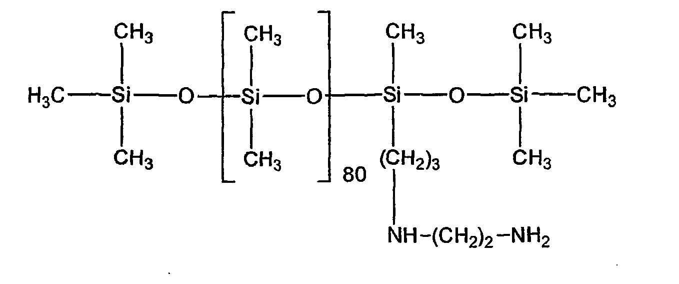 (hergestellt analog der in DE 19829166 A1 beschriebenen Equilibrierung) mit 0,75 Gramm Essigsäure 60 Gew.-%, 20 Gramm eines Isodecylalkoholes mit 7 Ethylenoxidgruppen, 6 Gramm Butyldiglykol und 137,25 Gramm demineralisiertem Wasser von 75°C. Die Mischung wird bei 70°C während 30 Minuten gerührt, wobei 200 Gramm einer wasserklaren Mikroemulsion mit einem Organopolysiloxananteil von 18 Gewichtsprozent entstehen.

### Beispiel 2 (nicht erfindungsgemäß)

Eine Zubereitung wird hergestellt durch Verrühren von 36 Gramm eines Organopolysiloxanes mit lateral positionierten Aminogruppen der durchschnittlichen Struktur 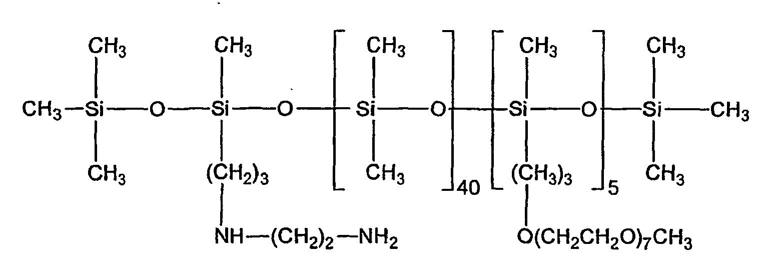 (hergestellt analog der in EP 1 174 469 A2 beschriebenen Lehre) mit 0,75 Gramm Essigsäure 60 Gew.-% und 163,25 Gramm demineralisiertem Wasser von 30°C. Die Mischung wird bei 30°C während 30 Minuten gerührt, wobei 200 Gramm einer transparenten Mikroemulsion mit einem Organopolysiloxananteil von 18 Gewichtsprozent entstehen.

### Beispiel 3 (erfindungsgemäß)

Eine hochkonzentrierte, wasserfreie, selbstemulgierende Zubereitung wird durch Verrühren von 180 Gramm eines Organopolysiloxanes mit lateral positionierten Aminogruppen sowie terminal positionierten und quaternierten Aminogruppen (Komponente (1)) der durchschnittlichen Struktur 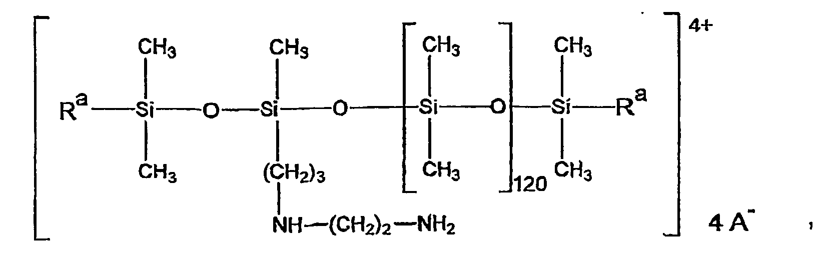 wobei
R^{a}= 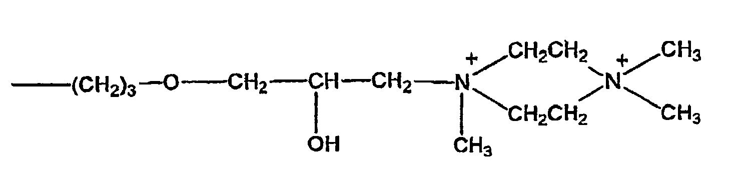 und
A⁻ = 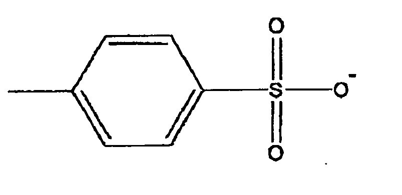 ist, mit 15 Gramm eines Methyl-bis-(2-hydroxyethyl)-oleyl-ammoniumchlorides (Komponente (2)), gemischt mit 5 Gramm Propylenglykol (Komponente (3)) bei 30°C hergestellt. Man erhält 200 Gramm einer transparenten, viskosen, gelblichen Zubereitung mit einem Organopolysiloxananteil von 90 Gewichtsprozent. Der Gesamtstickstoffgehalt des Organopolysiloxanes beträgt 0,8 Gewichtsprozent.

20 Gramm der Zubereitung werden durch einfaches Einrühren bei Raumtemperatur in 80 Gramm demineralisiertes Wasser auf eine Konzentration von 18 Gewichtsprozent des Organopolysiloxanes (Komponente (1)) vorverdünnt, wobei eine opaleszente Miniemulsion entsteht.

### Beispiel 4 (erfindungsgemäß):

Eine hochkonzentrierte, wasserfreie, selbstemulgierende Zubereitung wird durch Verrühren von 180 Gramm des in Beispiel 3 beschriebenen Organopolysiloxanes mit lateral positionierten Aminogruppen sowie terminal positionierten und quaternierten Aminogruppen (Komponente (1)) und 20 Gramm eines Tris-(2-hydroxyethyl)-oleyl-ammoniumacetates (Komponente (2)) bei 30 °C hergestellt. Man erhält 200 Gramm einer transparenten, viskosen, hellgelben Zubereitung mit einem Organopolysiloxananteil von 90 Gewichtsprozent. Der Gesamtstickstoffgehalt des Organopolysiloxanes beträgt 0,8 Gewichtsprozent. 20 Gramm der Zubereitung werden durch einfaches Einrühren bei Raumtemperatur in 80 Gramm demineralisiertes Wasser auf eine Konzentration von 18 Gewichtsprozent des Organopolysiloxanes (Komponente (1)) vorverdünnt, wobei eine wasserklare Mikroemulsion entsteht.

### Beispiel 5 (erFindungsgemäß):

Eine hochkonzentrierte, wasserfreie, selbstemulgierende Zubereitung wird durch Verrühren von 170 Gramm eines Organopolysiloxanes mit terminal positionierten und quaternierten Aminogruppen (Komponente (1)) der durchschnittlichen Struktur 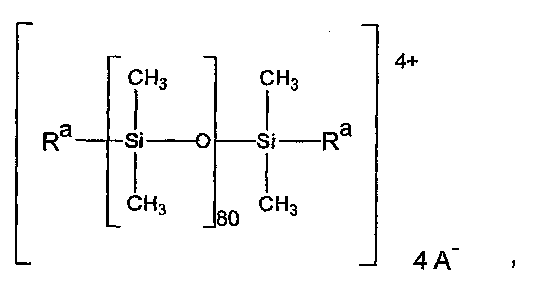 wobei R^{a} und A⁻ die in Beispiel 3 aufgeführten Bedeutungen haben, mit 20 Gramm eines mit Dimethylsulfat quaternierten Triethanolamindioleylesters (Komponente (2)) und 10 Gramm Butyldiglykol (Komponente(3)) bei 30°C hergestellt. Man erhält 200 Gramm einer transparenten, viskosen, gelben Zubereitung mit einem Organopolysiloxananteil von 85 Gewichtsprozent. Der Gesamtstickstoffgehalt des Organopolysiloxanes beträgt 0,8 Gewichtsprozent.

21,17 Gramm der Zubereitung werden durch einfaches Einrühren bei Raumtemperatur in 78,83 Gramm demineralisiertes Wasser auf eine Konzentration von 18 Gewichtsprozent des Organopolysiloxanes (Komponente (1)) vorverdünnt, wobei eine milchige Makroemulsion entsteht.

### Beispiel 6 (erfindungsgemäß):

Eine hochkonzentrierte, selbstemulgierende Zubereitung wird durch Verrühren von 140 Gramm des in Beispiel 3 beschriebenen Organopolysiloxanes mit lateral positionierten Aminogruppen sowie terminal positionierten und quaternierten Aminogruppen (Komponente (1)), 30 Gramm Carboxymethyl-bis-(2-hydroxyethyl)-oleyl-ammonium-Betain (Komponente (2)) und 30 Gramm demineralisiertem Wasser (Komponente (4)) hergestellt. Man erhält 200 Gramm einer transparenten, viskosen, gelben Zubereitung mit einem Organopolysiloxananteil von 70 Gewichtsprozent. Der Gesamtstickstoffgehalt des Organopolysiloxanes beträgt 0,8 Gewichtsprozent.

25,71 Gramm der Zubereitung werden durch einfaches Einrühren bei Raumtemperatur in 74,29 Gramm demineralisiertes Wasser auf eine Konzentration von 18 Gewichtsprozent des Organopolysiloxanes (Komponente (1)) vorverdünnt, wobei eine transparente Miniemulsion entsteht.

### Anwendungsbeispiele

In den folgenden Anwendungsbeispielen wurden die direkt erhaltenen Emulsionen der Beispiele 1 und 2 und die nach Vorverdünnung erhaltenen Emulsionen der Beispiele 3 bis 6, die alle jeweils 18 Gewichtsprozent des jeweiligen Organopolysiloxanes enthielten, mit demineralisiertem Wasser auf die in den Anwendungsbeispielen genannten Testkonzentrationen verdünnt.
Zur Einstellung eines schwach sauren Milieus, wie unter Praxisbedingungen üblich, wurden die bei den nachstehenden Testbedingungen genannten Zusätze an Essigsäure vorgenommen. Die Konzentration der Essigsäure betrug jeweils 60 Gewichtsprozent.

### Griffbeurteilung

Abschnitte einer gebleichten, nicht optisch aufgehellten Baumwoll-Frotteeware wurden mit einer wässrigen Flotte, enthaltend 20 g/l der gemäß den Beispielen 1 bis 6 hergestellten Emulsionen und 0,5 g/l Essigsäure auf einem Laborfoulard mit einer Nassaufnahme von 80 Gewichtsprozent, bezogen auf das Gewicht der trockenen Ware, imprägniert und anschließend 2 Minuten bei 120 °C getrocknet. Anschließend erfolgte die Beurteilung des Griffcharakters der mit den Emulsionen behandelten Testgewebe. Diese unterliegt individuell unterschiedlichen, subjektiven Kriterien. Um trotzdem zu aussagekräftigen Ergebnissen zu kommen, ist eine Beurteilung durch mindestens 5 Testpersonen erforderlich. Die Auswertung der in der Tabelle dargestellten Ergebnisse erfolgte nach statistischen Methoden, wobei die Notenstufe 1 den weichsten, angenehmsten Griff, die Notenstufe 5 den härtesten, am wenigsten oberflächenglatten und unangenehmsten Griff darstellt.

### Hydrophilie

Abschnitte einer gebleichten, nicht optisch aufgehellten Baumwoll-Frotteeware wurden mit einer wässrigen Flotte, enthaltend 20 g/l der gemäß den Beispielen 1 bis 6 hergestellten Emulsionen und 0,5 g/l Essigsäure auf einem Laborfoulard mit einer Nassaufnahme von 80 Gewichtsprozent, bezogen auf das Gewicht der trockenen Ware, imprägniert und abschließend 2 Minuten bei 120 °C getrocknet. Anschließend erfolgte die in der Tabelle dargestellte Beurteilung der Hydrophilie gemäß des TEGEWA-Tropftestes (Melliand Textilberichte 68 (1987), 581 - 583).

### Alkalistabilität

Die Stabilität der gemäß den Beispielen 1 bis 6 hergestellten Emulsionen gegen Alkalien in Ausrüstungsflotten wurde gemäß dem nachfolgend beschriebenen Test durchgeführt: Jeweils 500 ml einer wässrigen Flotte, enthaltend 40 g/l der zu untersuchenden Emulsionen wurden in einem 1000 ml Becherglas vorgelegt und mit Natriumhydroxidlösung (w(NaOH) = 10 %) auf einen pH-Wert von 10 eingestellt. Anschließend wurde die Flotte zwanzig Minuten mit einem Flügelrührer bei zweitausend Umdrehungen pro Minute gerührt. Nach dem Ablauf dieser Zeit wurde der Rührer abgestellt, der entstandenen Schaum zerfallen gelassen und die Flüssigkeitsoberfläche nach 1 Stunde hinsichtlich Abscheidungen beurteilt (Ergebnisse siehe Tabelle).

### Vergilbung

Abschnitte einer gebleichten, nicht optisch aufgehellten Baumwoll-Modal-Maschenware wurden mit einer wässrigen Flotte, enthaltend 20 g/l der gemäß den Beispielen 1 bis 6 hergestellten Emulsionen und 0,5 g/l Essigsäure auf einem Laborfoulard mit einer Nassaufnahme von 80 Gewichtsprozent, bezogen auf das Gewicht der trockenen Ware imprägniert, 2 Minuten bei 120°C getrocknet und anschließend 2 Minuten bei 170 °C thermofixiert. Anschließend wurde die in der Tabelle dargestellte Beurteilung des Weißgrades der Muster nach Ganz auf dem Weißgradmeßgerät "texflash 2000" der Firma "datacolor international" (Schweiz) gemessen.

### Reibechtheit

Abschnitte einer mit 2 Gewichtsprozent Dispersionsfarbstoff C.I. Disperse Blue 130 gefärbten Polyesterware mit einem Quadratmetergewicht von 200 Gramm wurden mit einer wässrigen Flotte, enthaltend 20 g/l der gemäß den Beispielen 1 bis 6 hergestellten Emulsionen und 0,5 g/l Essigsäure auf einem Laborfoulard mit einer Nassaufnahme von 60 Gewichtsprozent, bezogen auf das Gewicht der trockenen Ware, imprägniert und anschließend 1 Minute bei 180 °C getrocknet. Anschließend wurde die Bestimmung der Trocken- und Nassreibechtheit auf dem Crockmeter gemäß DIN EN 105-X12 durchgeführt (Ergebnisse siehe Tabelle).

### Schaumeigenschaften

Die Bestimmung des Schäumvermögens erfolgte gemäß DIN 53902 mit einer Flotte, enthaltend 2 g/l der gemäß den Beispielen 1 bis 6 hergestellten Emulsionen in demineralisiertem Wasser (Ergebnisse siehe Tabelle).

**Tabelle**

| | **Griffbeurteilung innerhalb der Testreihe** | | **Hydrophilie** | **Alakalistabilität bei pH 10** | **Vergilbung** | **Reibechtheit** | | **Schaumeigenschaften** |
|---|---|---|---|---|---|---|---|---|
| | Original | Nach 3 x 40°C Wäschen | Einsinkzeit in Sekunden | Beurteilung nach 1 Stunde | Weißgrad nach Ganz | Trocken | Naß | Schaumhöhe nach 1 Minute |
| Zubereitungen nach Beispiel 1 Zubereitungen nach Beispiel (nicht erfindungsgemäß) | 1,2 | 1,3 | > 180 | Ölfilm, Abscheidungen auf der Oberfläche | 136 | 2 | 2 | 70 mm |
| Zubereitungen nach Beispiel 2 (nicht erfindungsgemäß) | 4,1 | 4,3 | < 1 | Ölfilm, Abscheidungen auf der Oberfläche | 135 | 3 | 4 | 50 mm |
| Zubereitungen nach Beispiel 3 (erfindungsgemäß) | 1,9 | 1,9 | < 1 | Keine Abscheidungen | 143 | 4 | 4 - 5 | 40 mm |
| Zubereitungen nach Beispiel 4 (erfindungsgemäß) | 1,6 | 1,3 | < 1 | Keine Abscheidungen | 146 | 4 | 4 - 5 | 40 mm |
| Zubereitungen nach Beispiel 5 (erfindungsgemäß) | 2,0 | 1,9 | < 1 | Keine Abscheidungen | 141 | 3 - 4 | 4 - 5 | 0 mm |
| Zubereitungen nach Beispiel 6 (erfindungsgemäß) | 2,2 | 2,0 | < 1 | Keine Abscheidungen | 140 | 3 - 4 | 4 | 45 mm |
| Unbehandelt | 5,0 | 5,0 | < 1 | - | 140 | 4 - 5 | 5 | - |

## Patentansprüche

1. Zubereitungen, **gekennzeichnet durch** einen Gehalt, bezogen auf die Gesamtzusammensetzung, an
(1) 40 bis 95 Gewichtsprozent eines quaternierten oder teilquaternierten, aminofunktionellen Organopolysiloxans der allgemeinen Formel 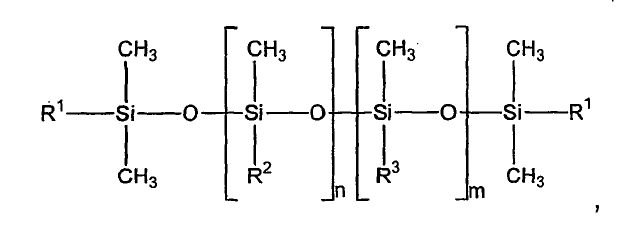 wobei
R¹= 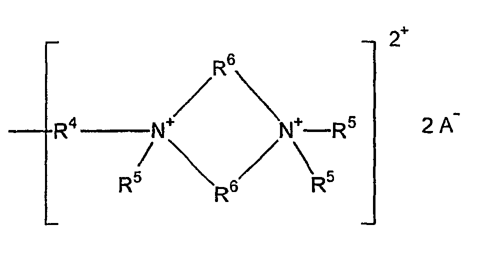 oder 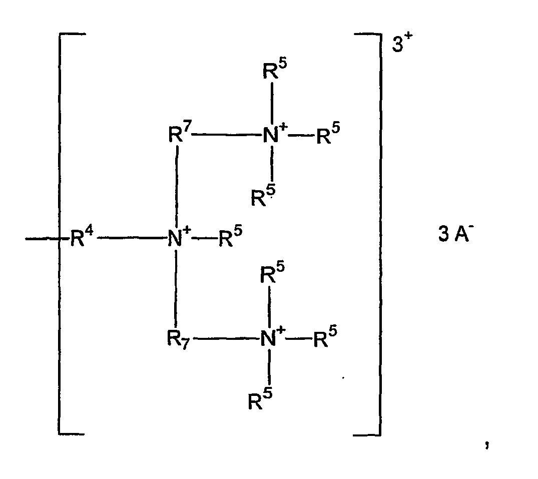 R²= -(CH₂)ₒ-NH-(CH₂)ₚ-NH₂ oder -(CH₂)ₚ-NH₂,
R³= -(CH₂)_{q}-H oder 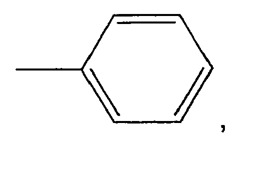 R⁴= 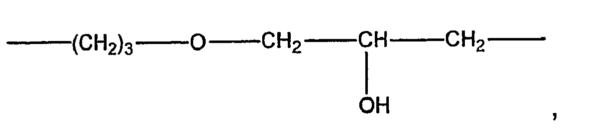 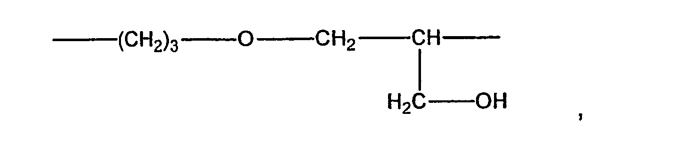 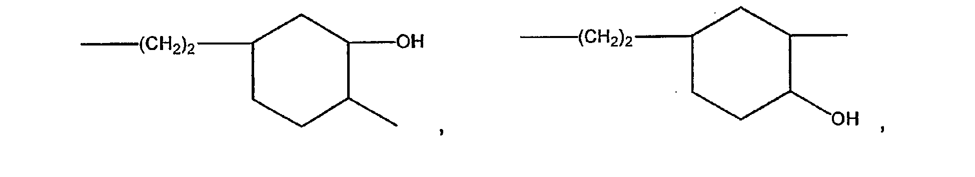 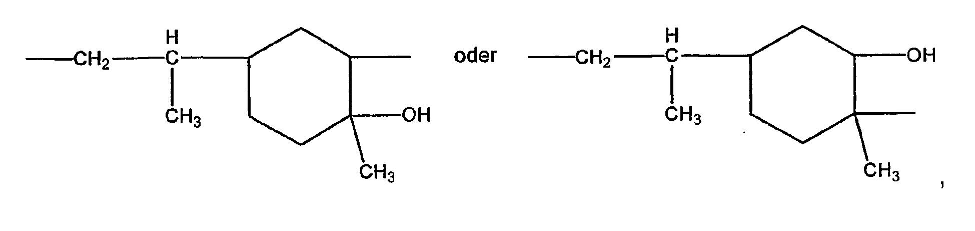
R⁵= -(CH₂)ᵣ-H,
R⁶= -(CH₂)ₛ-,
R⁷= -(CH₂)ₜ-,
A⁻ anorganische oder organische Anionen,
n eine ganze Zahl von 0 - 20,
m eine ganze Zahl von 20 - 2000,
o, p und q jeweils eine ganze Zahl von 1 - 10,
r eine ganze Zahl von 1 - 18,
s eine ganze Zahl von 2 - 3 und
t eine ganze Zahl von 2 - 5
bedeuten, mit der Maßgabe, dass der Gesamtstickstoffgehalt der Komponente (1) 0,05 bis 2,0 Gewichtsprozent, bezogen auf die Gesamtzusammensetzung von Komponente (1) beträgt,
(2) 2 bis 20 Gewichtsprozent einer Alkylammoniumverbindung der allgemeinen Formel 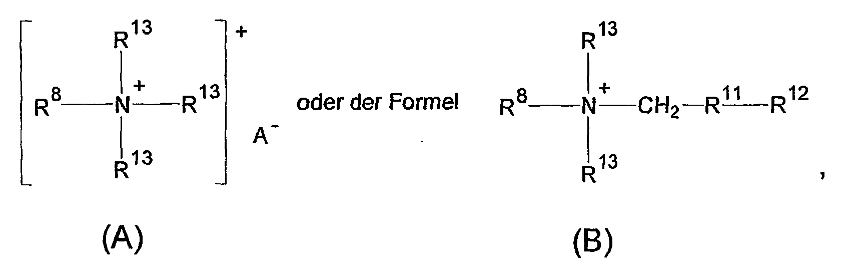 wobei
R⁸= -R⁵ oder -R¹⁰,
R¹³= -R⁵, -R¹⁴ oder 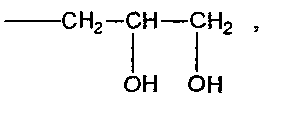 R¹⁴ = 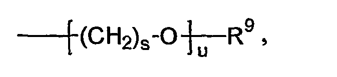 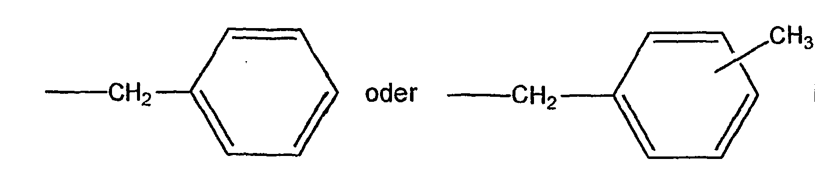 ist, mit der Maßgabe, dass, wenn in den Formeln (A) und (B) R⁸ und R¹³ gleichzeitig R⁵ darstellen, das diese Reste tragende Stickstoffatom höchstens zwei Reste R⁵ und mindestens einen Rest R¹⁴ aufweist,
R⁹= -(CH₂)_{w}-H, 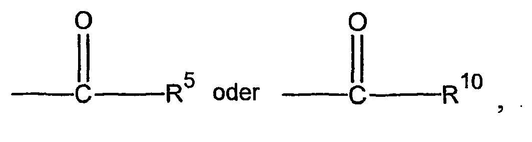 R¹⁰= -Oleyl, -Linoleyl oder -Linolenyl,
R¹¹= -(CH₂)_{w}-,
R¹² = 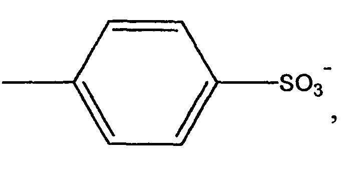 -SO₃⁻ oder -COO⁻,
u = 1 - 6,
w = 0 - 20 bedeuten und
wobei A⁻, R⁵ und s die bei der Komponente (1) genannten Bedeutungen besitzen,
(3) 0 bis 20 Gewichtsprozent eines organischen Hydrotropikums und
(4) 0 bis 20 Gewichtsprozent Wasser.

2. Verwendung der Zubereitungen gemäß Anspruch 1 bei der Veredelung textiler Substrate in wässrigen Bädern und Anwendungsflotten, gegebenenfalls zusammen mit weiteren Präparationsmitteln.

## Claims

1. Preparations **characterised by** a content, relative to the total composition, of
(1) 40 to 95 percent by weight of a quaternised or partially quaternised amino-functional organopolysiloxane having the general formula 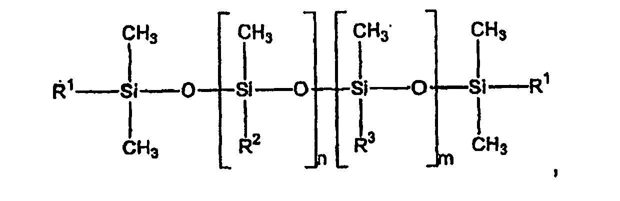 wherein
R¹= 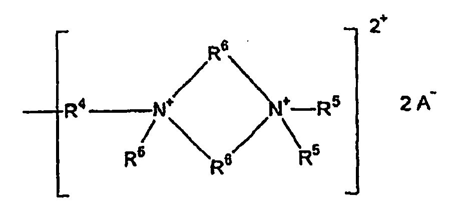 or 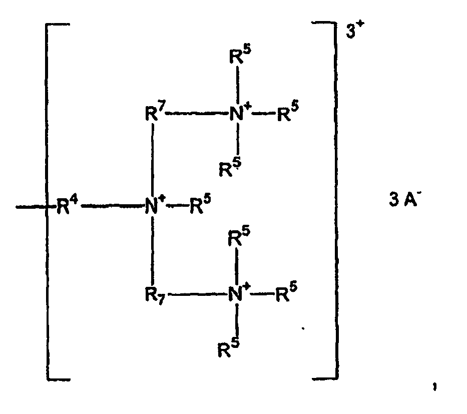 R²= -(CH₂)ₒ-NH-(CH₂)ₚ-NH₂ or -(CH₂)ₚ-NH₂,
R⁹= -(CH₂)_{q}-H or 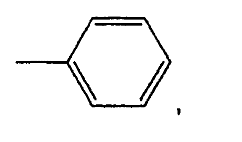 R⁴= 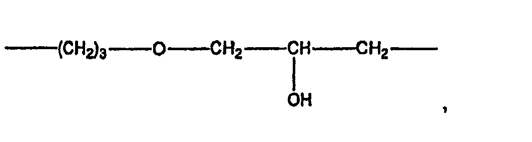 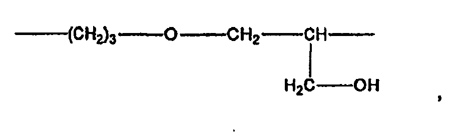 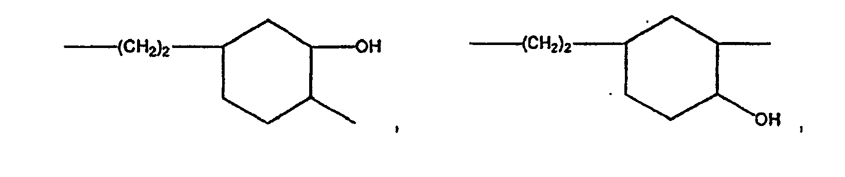 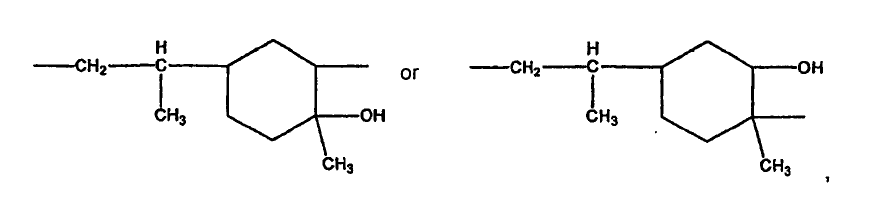
R⁵= -(CH₂)ᵣ-H,
R⁶= -(CH₂)ₛ-,
R⁷= -(CH₂)ₜ-,
A⁻ denotes inorganic or organic anions,
n denotes a whole number from 0 to 20,
m denotes a whole number from 20 to 2000,
o, p and q each denote a whole number from 1 to 10,
r denotes a whole number from 1 to 18,
s denotes a whole number from 2 to 3 and
t denotes a whole number from 2 to 5
with the proviso that the total nitrogen content of component (1) is 0.05 to 2.0 percent by weight, relative to the total composition of component (1),
(2) 2 to 20 parts by weight of an alkyl ammonium compound having the general formula 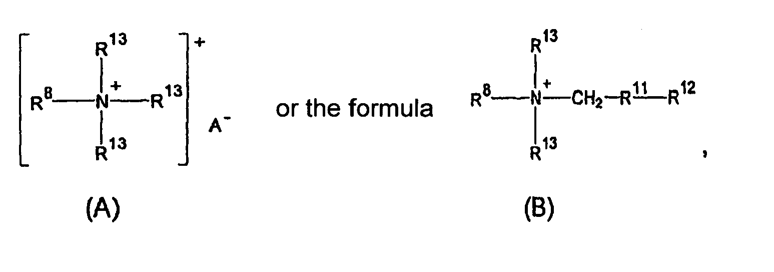 wherein
R⁸ = -R⁵ or -R¹⁰,
R¹³ = -R⁵, -R¹⁴ or 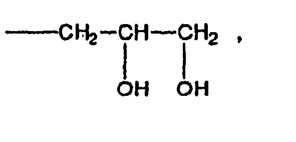 R¹⁴ = 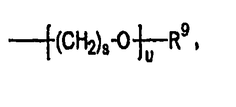 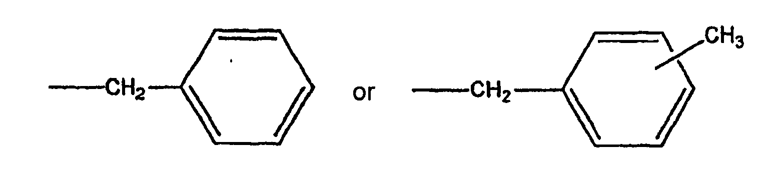 with the proviso that if in formulae (A) and (B) R⁸ and R¹³ both denote R⁵, the nitrogen atom bearing these radicals has at most two radicals R⁵ and at least one radical R¹⁴,
R⁹ = -(CH₂)_{w}-H, 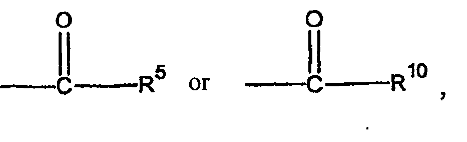 R¹⁰ = -oleyl, -linoleyl or -linolenyl,
R¹¹ = -(CH₂)_{w}-,
R¹² = 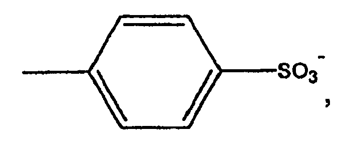 -SO₃⁻ or -COO⁻,
u = 1 to 6
w = 0 to 20 and
wherein A⁻, R⁵ and s have the meanings given for component (1),
(3) 0 to 20 percent by weight of an organic hydrotropic agent and
(4) 0 to 20 percent by weight of water.

2. Use of the preparations according to claim 1 in the finishing of textile substrates in aqueous baths and application liquors, optionally together with further preparation agents.

## Revendications

1. Préparations **caractérisées par** une teneur, rapportée à la composition totale, en
(1) 40 à 95 pourcent en poids d'un organopolysiloxane aminofonctionnel quatemisé ou partiellement quatemisé de formule générale 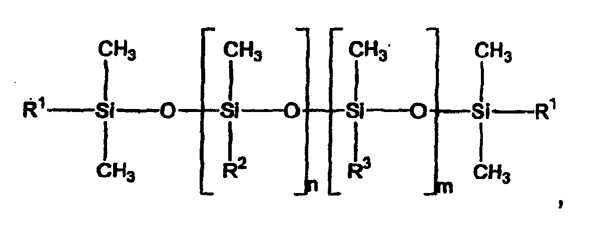 où
R¹= 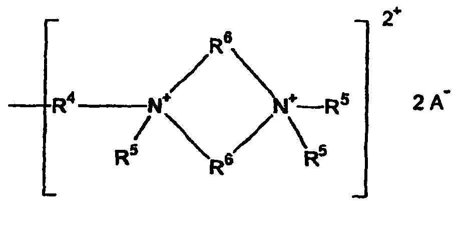 ou 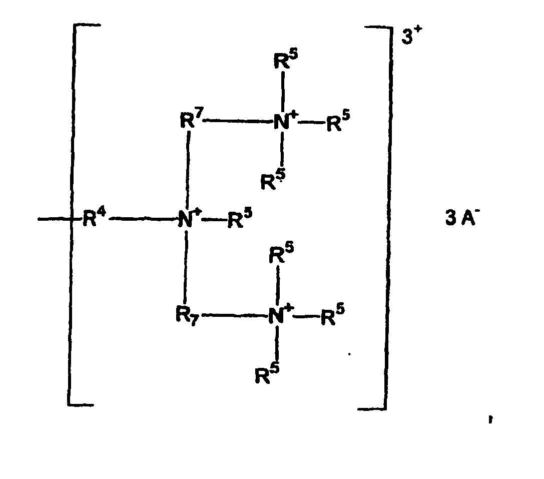 R²= -(CH₂)ₒ-NH-(CH₂)ₚ-NH₂ ou -(CH₂)ₚ-NH₂,
R³= -(CH₂)_{q}-H ou 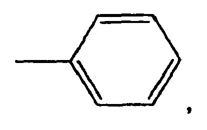 R⁴= 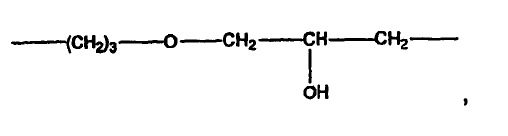 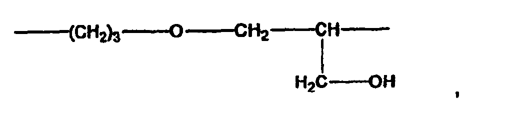 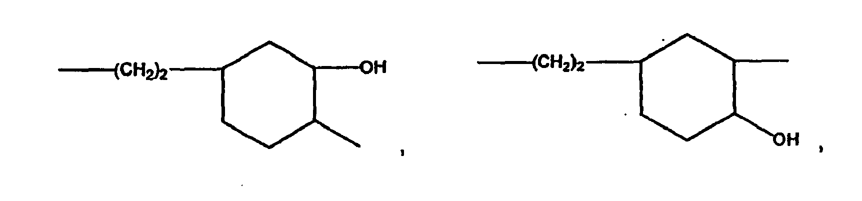 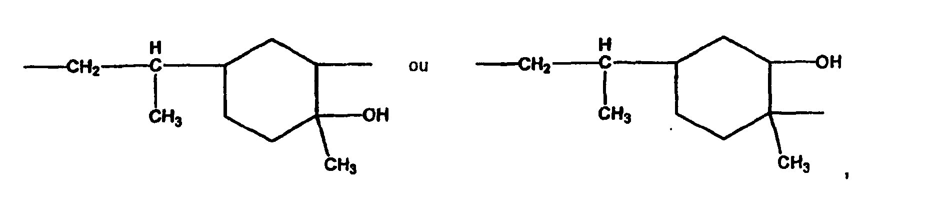 R⁵= -(CH₂)ᵣ-H,
R⁶= -(CH₂)ₛ-,
R⁷= -(CH₂)ₜ-,
A⁻ représente des anions inorganiques ou organiques,
n représente un nombre entier de 0 - 20,
m représente un nombre entier de 20 - 2000,
o, p et q représentent chacun un nombre entier de 1 - 10,
r représente un nombre entier de 1 - 18,
s représente un nombre entier de 2- 3 et
t représente un nombre entier de 2 - 5
avec la condition que la teneur totale en azote du composant (1) soit de 0,05 à 2,0 pourcent en poids, rapportée à la composition totale du composant (1),
(2) 2 à 20 pourcent en poids d'un composé alkylammonium de formule générale 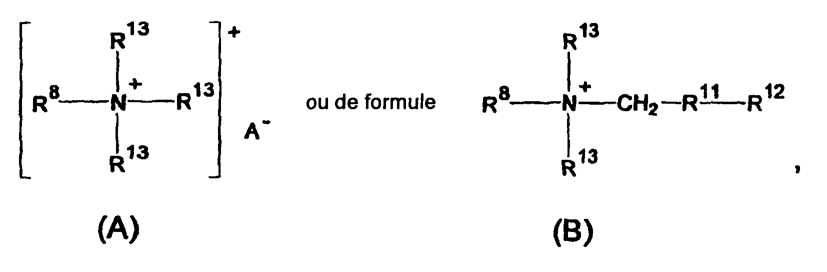 où
**R⁸= -R⁵** ou **-R¹⁰**,
**R¹³= -R⁵, -R¹⁴** ou 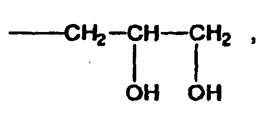 **R¹⁴ =** 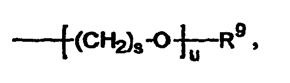 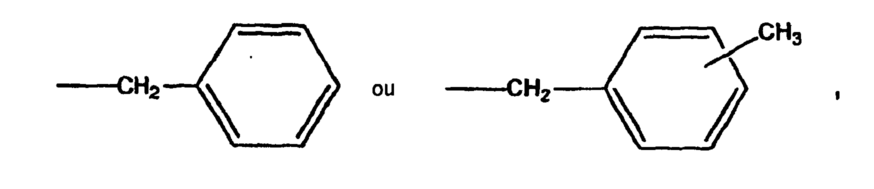 avec la condition que, quand, dans les formules (A) et (B), R⁸ et R¹³ représentent en même temps R⁵, l'atome d'azote portant ces groupements comporte au plus deux groupements R⁵ et au moins un groupement R¹⁴,
R⁹= -(CH₂)_{w}-H, 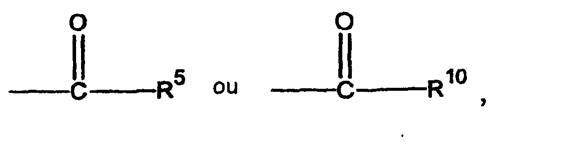 R¹⁰= -oléyle, -linoléyle ou linolényle,
R¹¹= -(CH₂)_{w}-,
R¹² = 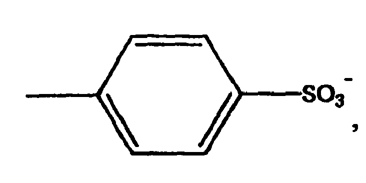 -SO₃⁻ ou -COO⁻,
u = 1 - 6,
w = 0 - 20 et
où A⁻, R⁵ et s possèdent les significations citées au sujet du composant (1),
(3) 0 à 20 pourcent en poids d'un hydrotrope organique et
(4) 0 à 20 pourcent en poids d'eau.

2. Utilisation des préparations selon la revendication 1 dans l'ennoblissement de substrats textiles dans des bains aqueux et des bains d'application, éventuellement en même temps que d'autres agents de préparation.
